# EUROPÄISCHE PATENTSCHRIFT

(11) **EP 2 379 899 B1**
(45) Veröffentlichungstag und Bekanntmachung des Hinweises auf die Patenterteilung: **26.12.2012**
(21) Anmeldenummer: 10704085.9
(22) Anmeldetag: 15.01.2010
(51) Int. Cl.: F16B 39/38

(54) **SCHRAUBELEMENT, SCHRAUBVERBINDUNG SOWIE VERFAHREN ZUM HERSTELLEN EINES SCHRAUBENELEMENTES**
SCREW ELEMENT, SCREW CONNECTION AND METHOD FOR PRODUCING A SCREW ELEMENT
ELEMENT FILETE, ASSEMBLAGE FILETE, ET PROCEDE DE PRODUCTION D'UN ELEMENT FILETE

(30) Priorität: 16.01.2009 DE 102009005336
(43) Veröffentlichungstag der Anmeldung: 26.10.2011
(73) Patentinhaber: Flaig, Hartmut, D-78554 Aldingen (DE)
(72) Erfinder: HOLSCHER, Winfried K. W., 78234 Engen (DE)
(74) Vertreter: Wagner, Kilian
(86) Internationale Anmeldenummer: PCT/EP2010/000202
(87) Internationale Veröffentlichungsnummer: WO 2010/081714

(56) Entgegenhaltungen:
- DE-C- 904 013
- GB-A- 668 764
- GB-A- 669 698
- US-A- 2 347 910
- US-A- 4 661 031

## Beschreibung

Die Erfindung betrifft ein Verfahren zum Herstellen eines Schraubenelementes gemäß dem Oberbegriff des Anspruchs 1, ein Schraubenelement mit einem ersten Außengewindeabschnitt und einem zweiten Außengewindeabschnitt gemäß Anspruch 7, sowie eine Schraubverbindung gemäß Anspruch 16.

Bei herkömmlichen Schrauben mit einem einzigen Außengewindeabschnitt besteht das Problem, dass sich die Schraube mit der Zeit, beispielsweise durch Betriebsschwingungen etc. einer mit der Schraube versehenen Vorrichtung, lösen kann. Dies kann sicherheitsrelevante Folgen haben.

Neben den zuvor beschriebenen einfachen Schrauben sind sogenannte, als Differenzgewindeschrauben ausgebildete Sicherungsschrauben bekannt. Schrauben mit Differenzgewinde ermöglichen ein festes Verspannen von Bauteilen, wobei beim Verschrauben der Schraube mit einem Innengewindeelement ein Bremsmoment resultiert, welches die Sicherungsfunktion gewährleistet. Die Entstehung des Bremsmomentes ist darauf zurückzuführen, dass die Schraube zwei unterschiedliche Außengewindeabschnitte aufweist, die zwar die gleiche Gangrichtung, jedoch eine voneinander unterschiedliche Steigung aufweisen. Wird eine derartige Differenzgewindeschraube mit einem Innengewinde verschraubt, kommt es zu einer Verspannung der Außengewindeabschnitte mit dem Innengewinde. Bei bekannten Differenzgewindeschrauben gehen die beiden Außengewindeabschnitte üblicherweise unmittelbar ineinander über. Nachteilig bei den bekannten Differenzgewindeschrauben ist deren aufwändige Fertigung.

Aus der DE 490 889 ist eine Schraubenmutter (kein Schraubenelement) bekanntgeworden, die sich selbständig gegen ein unbeabsichtigtes Lösen sichert. Hierzu weist die bekannte Schraubenmutter zwei in axialer Richtung voneinander beabstandete Innengewindeabschnitte auf, wobei zwischen den Innengewindeabschnitten ein umlaufender, innerer Einstich vorgesehen ist, der durch spanende Bearbeitung hergestellt ist. Die Bremswirkung ist darauf zurückzuführen, dass die beiden Innengewindeabschnitte nach dem Einbringen des Einstichs axial aufeinanderzu bewegt werden, wodurch ein Innengewindesteigungssprung realisiert ist, der dafür sorgt, dass sich die Innengewindeabschnitte beim Verschrauben mit einem gemeinsamen Außengewindeelement im Gewindegang des Außengewindeelementes axial (etwas) verspannen. Nachteilig bei der bekannten Schraubenmutter ist, dass diese notwendigerweise mittels spanender Bearbeitung hergestellt werden muss.

Aus der DE 904 013 B ist ein Schraubenelement mit zwei versetzt zueinander angeordneten Außengewindeabschnitten bekannt, wobei die Außengewinde der Außengewindeabschnitte nacheinander in einen Schraubenrohling eingebracht werden.

Aus der DE 25 27 557 A1 ist eine Schraube mit zwei axial versetzten Außengewindeabschnitten bekannt, wobei die Außengewindeabschnitte gleichzeitig, jedoch mit einer Spezialgewinde-Walzbacke eingebracht werden, die zwei entsprechend axial zueinander versetzte Felder mit Vertiefungen und Erhöhungen zum Einbringen der Gewinderillen aufweist.

Die DE 213 668 B beschreibt ebenfalls eine Schraube mit zwei axial versetzten Außengewindeabschnitten.

Nachteilig bei den bekannten Schraubenelementen ist u.a., dass diese nicht für die Mehrfachverwendung ausgelegt sind. Beim Verschrauben der bekannten Schraubenelemente mit einem Innengewindeelement kommt es zu einer plastischen, d.h. irreversiblen Verformung. Darüber hinaus neigen bekannte Schraubenelemente zum Fressen, wodurch Gewindegänge beschädigt werden. Ferner sind mit den bekannten Schraubenelementen fertigungsbedingte Toleranzen beim Innengewindeelement nicht ausgleichbar, was dazu führen kann, dass in Abhängigkeit der Toleranz (Über- oder Untermaß) entweder gar kein Bremsmoment wirkt oder das Bremsmoment einen maximal zulässigen Wert überschreitet.

Aus der GB 668 764 A sowie der US 2 347 910 A ist ein Verfahren zum Herstellen eines Schraubenelementes bekannt, wobei in einen Schraubenschaft ein Außengewinde eingebracht wird, woraufhin das Außengewinde durch spanende Bearbeitung, d.h. durch Einbringen einer Umfangsnut in zwei Außengewindeabschnitte unterteilt wird, die dann relativ zueinander verstellt werden, um beim Verschrauben mit einem Gegengewindeelement ein Bremsmoment zu bewirken.

Weiterhin zum Stand der Technik werden die US 4 661 031 A sowie die GB 669 698 A genannt.

Der Erfindung liegt die Aufgabe zugrunde, ein Verfahren zum einfachen Herstellen eines Sicherungs-Schraubenelementes anzugeben sowie ein als Sicherungsschraube verwendbares Schraubenelement, welches mit dem erfindungsgemäßen Verfahren fertigbar ist. Ferner besteht die Aufgabe darin, eine Schraubverbindung mit mindestens einem entsprechend optimierten Schraubenelement anzugeben.

Diese Aufgabe wird hinsichtlich des Verfahrens mit den Merkmalen des Anspruchs 1, hinsichtlich des Schraubenelementes mit den Merkmalen des Anspruchs 5 und hinsichtlich der Schraubverbindung mit den Merkmalen des Anspruchs 14 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen. Zur Vermeidung von Wiederholungen sollen vorrichtungsgemäß offenbarte Merkmale als verfahrensgemäß offenbart gelten und beanspruchbar sein. Ebenso sollen verfahrensgemäß offenbarte Merkmale als vorrichtungsgemäß offenbart gelten und beanspruchbar sein.

Die Erfindung führt auf ein Verfahren zum Herstellen eines später beschriebenen (Sicherungs-)Schraubenelementes. Das Verfahren ist dadurch gekennzeichnet, dass ein erster und ein zweiter Außengewindeabschnitt eines Schraubenelementrohlings derart zueinander positioniert werden, dass beim gemeinsamen Verschrauben der beiden Außengewindeabschnitte mit einem Innengewindeelement ein Bremsmoment resultiert.

Gemäß der Erfindung erfolgt die Positionierung der Außengewindeabschnitte durch ein definiertes relatives Verstellen der Außengewindeabschnitte in axialer Richtung und/oder in Umfangsrichtung.

Das erfindungsgemäße Schraubenelement wird bevorzugt zur Gewährleistung des Bremsmomentes gestreckt, d.h. die beiden fertigen Außengewindeabschnitte werden axial plastisch voneinander weg verstellt, so dass das Schraubenelement beim bestimmungsgemäßen Einsatz, also bei der Verschraubung mit einem Innengewindeelement gestaucht wird und zwar bevorzugt elastisch, wodurch das Gewindespiel in Zugrichtung des Schraubenelementes eliminiert wird und es zu einer Bremsmomentwirkung kommt.

Erfindungsgemäß wird zunächst ein Schraubenelementrohling, vorzugsweise durch Pressen, ganz besonders bevorzugt durch Kaltfließpressen, hergestellt, wobei der Schraubenelementrohling einen, insbesondere endseitigen, vorzugsweise zylindrischen, Schraubenelementrohlingsabschnitt aufweist, der benachbart zu einem Axialabschnitt angeordnet ist. Erfindungsgemäß unterscheidet sich der Schraubenelementrohlingsabschnitt von dem benachbarten (zweiten) Axialabschnitt im Hinblick auf die Größe seines Durchmessers. Dabei ist es wesentlich dass der, insbesondere endseitige, Schraubenelementrohlingsabschnitt einen geringeren Durchmesser aufweist, als der benachbarte (zweite) Axialabschnitt. Der Schraubenelementrohlingsabschnitt wird in einem darauffolgenden Fertigungsschritt gepresst, vorzugsweise kaltfließgepresst, derart, dass nach dem Pressvorgang aus dem Schraubenelementrohlingsabschnitt ein erster Axialabschnitt resultiert, dessen Durchmesser, zumindest näherungsweise, vorzugsweise exakt, dem Durchmesser des zweiten Axialabschnittes entspricht.

Der erste Außengewindeabschnitt wird entweder in einem darauffolgenden Fertigungsschritt oder gleichzeitig mit dem Herstellen des ersten Axialabschnitts aus dem Schraubenelementrohlingsabschnitt an dem ersten Axialabschnitt hergestellt. Bevorzugt wird, wie später noch erläutert werden wird, also gleichzeitig mit der Herstellung des ersten Außengewindeabschnittes, also gleichzeitig (d.h. in einem Arbeitsgang) mit dem Einbringen des Außengewindes in den ersten Axialabschnitt, auch das Außengewinde in den zweiten Axialabschnitt eingebracht.

Im Hinblick auf die Realisierung des Pressvorgangs (insbesondere Kaltfließpressvorgang) zur Durchmesservergrößerung des ersten Axialabschnittes ist es bevorzugt, wenn der Schraubenelementrohlingsabschnitt derart gepresst wird, dass der resultierende erste Axialabschnitt auch in einem radial äußeren Bereich unmittelbar am zweiten Axialabschnitt anliegt.

Wie zuvor erläutert ist es ganz besonders bevorzugt, wenn das Außengewinde des ersten Außengewindeabschnittes in dem selben Arbeitsschritt, vorzugsweise durch Pressen oder Rollieren, in den Schraubenelementrohling eingebracht wird wie das Außengewinde des zweiten Außengewindeabschnittes. Weiter bevorzugt ist es, wenn die Gewinde gleichzeitig mit dem Pressen des ersten Axialabschnittes in beide Axialabschnitte zur gleichzeitigen Herstellung der Außengewindeabschnitte eingebracht werden. Wie ebenfalls zuvor bereits erläutert, ist der Durchmesser des ersten Axialabschnittes vor dem Pressen, also als Schraubenelementrohlingsabschnitt, geringer als der Durchmesser des zweiten Axialabschnittes, wobei der Durchmesser des Schraubenelementrohlingsabschnittes beim weiteren Pressvorgang an den Durchmesser des zweiten Axialabschnittes angeglichen wird und auf diese Weise der erste Axialabschnitt geschaffen wird. Anders ausgedrückt wird der erste Axialabschnitt aus einem durchmesserreduzierten Schraubenelementrohlingsabschnitt, vorzugsweise einem endseitigen Schraubenelementrohlingsabschnitt, gepresst, wobei das Verpressen derart realisiert werden sollte, dass nach dem Pressen kein Axialabstand zwischen den, vorzugsweise bereits mit einem Außengewinde versehenen, Axialabschnitten realisiert ist, derart, dass die Axialabschnitte stirnseitig vollflächig aneinander anliegen.

Die zuvor beschriebene Ausführungsvariante des Verfahrens, nach der die beiden Axialabschnitte nach dem Pressen, insbesondere nach dem Kaltfließpressen, des Schraubenelementrohlings axial (stirnseitig) aneinander anliegen ist besonders bevorzugt, da hierdurch ein Schraubenelement mit minimaler Axialerstreckung fertigbar ist. Anders ausgedrückt kann durch die beschriebene Verfahrensweise die axiale Ausdehnung des herzustellenden Spaltes zwischen den Außengewindeabschnitten auf ein Minimum beschränkt werden. Bevorzugt beträgt die Axialersteckung dieses Axialspalts (nach dem axialen Verstellen der Außengewindeabschnitte) zwischen den Außengewindeabschnitten weniger als 2mm, noch weiter bevorzugt weniger als 1mm, noch weiter bevorzugt weniger als 0,6mm. Ganz besonders bevorzugt werden die Außengewindeabschnitte soweit axial voneinander weg verstellt, dass die Axialerstreckung des Spaltes aus einem Wertebereich zwischen etwa 0,1mm und 0,5mm gewählt ist. Dabei entspricht die Axialerstreckung des Spaltes (Umfangnut) bevorzugt der Axialerstreckung des Verbindungsabschnittes, der die beiden Außengewindeabschnitte miteinander verbindet.

Bevorzugt ist der Durchmesser des, vorzugsweise zylindrisch konturierten, die Außengewindeabschnitte einstückig miteinander verbindenden Verbindungsabschnittes so gewählt, dass das Schraubenelement ein dynamisches Verhalten aufweist. Anders ausgedrückt ist der Durchmesser des Verbindungsabschnittes so gewählt, dass sich das Schraubenelement beim Verschrauben mit einem Innengewindeelement axial elastisch verformen (stauchen) lässt, dass das Schraubenelement also reversibel axial verformbar ist. Auf diese Weise kann das Schraubenelement vielfach eingesetzt werden - es neigt nicht zu einem Fressen. Darüber hinaus kann ein vergleichsweise großer Fertigungstoleranzbereich des Innengewindeelementes ausgeglichen werden - unzulässige (zu große oder zu kleine Bremsmomente) werden weitgehend vermieden.

Als besonders vorteilhaft hat es sich herausgestellt, wenn der Durchmesser des die Außengewindeabschnitte axial verbindenden Verbindungsabschnittes maximal 75% des Durchmessers, insbesondere des Kerndurchmessers der Außengewindeabschnitte beträgt, welche bevorzugt den gleichen Durchmesser, insbesondere Kerndurchmesser aufweisen. Besonders vorteilhaft ist es, wenn der Durchmesser des Verbindungsabschnittes etwa 20% bis 75% des Durchmessers der Außengewindeabschnitte beträgt, noch weiter bevorzugt ist es, wenn der Durchmesser des Verbindungsabschnittes etwa 25% bis 50% des Durchmessers der Außengewindeabschnitte beträgt.

Besonders zweckmäßig ist es, wenn der Verbindungsabschnitt so ausgelegt wird, dass eine elastische Verstellung der beiden Außengewindeabschnitte aufeinander zu aus einem Wertebereich zwischen etwa 0,05mm und 0,4mm, ganz besonders bevorzugt zwischen etwa 0,1mm und 0,3mm ermöglicht wird.

Das axiale Verstellen der Axialabschnitte relativ zueinander kann beispielsweise dadurch realisiert werden, dass auf den ersten Außengewindeabschnitt ein Innengewinde aufgeschraubt wird und der den zweiten Außengewindeabschnitt aufweisende Schraubenteil eingespannt wird, wobei die beiden Axialabschnitte in einem darauffolgenden Schritt durch Aufbringen einer definierten Axialkraft, beispielsweise mittels einer Kolbenzylindereinheit, vorzugsweise einer hydraulischen Kolbenzylindereinheit, um einen definierten Weg (vorzugsweise 0,1mm bis 0,5mm) voneinander weg bewegt werden.

Zusätzlich oder alternativ zu einem axialen Verstellen der Außengewindeabschnitte können diese auch relativ zueinander in Umfangsrichtung tordiert werden, wobei beim Tordieren darauf geachtet werden muss, dass keine (allzu große) Materialschwächung resultiert.

Die Axialabschnitte werden, insbesondere zum Herstellen eines auf Zug beaufschlagbaren Schraubenelementes, axial voneinander weg verstellt.

Bei dem erfindungsgemäßen Schraubelement wird das Bremsmoment (Halte- oder Sicherungsmoment) dadurch realisiert, dass die mindestens zwei, vorzugsweise ausschließlich zwei, Außengewindeabschnitte des Schraubenelementes das Bremsmoment verursachend zueinander positioniert werden, um ein selbstsicherndes Schraubenelement zu erhalten. Anders ausgedrückt ist das Bremsmoment bei einem nach dem Konzept der Erfindung ausgebildeten Schraubenelement nicht, zumindest nicht ausschließlich, auf die spezielle Ausgestaltung der Außengewindeabschnitte als solches, sondern auf deren Relativposition zurückzuführen. Wie später noch erläutert werden wird, können die Außengewindeabschnitte beispielsweise durch axiales Verstellen und/oder durch Verstellen in Umfangsrichtung derart zueinander positioniert werden, dass beim Verschrauben der Außengewindeabschnitte mit einem gemeinsamen Innengewindeelement ein Bremsmoment resultiert. Dadurch, dass die Außengewindeabschnitte, ggf. bis auf ihre Länge, aufgrund der Erfindung identisch ausgebildet werden können, kann die Fertigung des Schraubenelementes wesentlich erleichtert werden. Darüber hinaus lässt sich während der Fertigung auf einfache Weise durch eine definierte Positionierung, beispielsweise durch ein definiertes Verstellen der Axialabschnitte relativ zueinander, reproduzierbar (ohne spanende Bearbeitung) ein Bremsmoment mit einer definierten Größe bei sämtlichen herzustellenden Schraubenelementen erzeugen.

Besonders zweckmäßig ist es den die beiden Außengewindeabschnitte miteinander verbindenden und voneinander beabstandenden, einstückig mit den Außengewindeabschnitten ausgebildeten Verbindungsabschnitt nur so dick zu wählen, dass eine elastische Stauchung möglich ist, und zwar vorzugsweise um mindestens 0,05mm, ganz besonders bevorzugt um mindestens 0,1mm, noch weiter bevorzugt um 0,2mm, ganz besonders bevorzugt um mindestens 0,3mm. Durch die elastische Stauchbarkeit des Schraubenelementes im Bereich des Verbindungsabschnittes wird gewährleistet, dass das nach dem Konzept der Erfindung ausgebildete Schraubenelement mehrfach einsetzbar ist, ohne dass dabei ein (merkbarer) Bremsmomentverlust zu verzeichnen wäre. Durch das elastische Stauchen des Schraubenelementes beim Verschrauben des Schraubenelementes mit dem mit den Außengewindeabschnitten korrespondierenden Innengewindeelement wird das Gewindespiel in Zugrichtung der Schraubenverbindung eliminiert. Das erfindungsgemäße Schraubenelement eignet sich aufgrund der elastischen Stauchbarkeit ideal zum Ausgleich von fertigungsbedingten Toleranzen des Innengewindeelementes und gewährleistet in einem vergleichsweise großen Toleranzbereich ein vergleichsweise konstantes Bremsmoment.

Bevorzugt wird der Spalt (Umfangsnut) zwischen den beiden Außengewindeabschnitten, also die Länge des Verbindungsabschnittes nur etwas größer als das Gewindespiel der herzustellenden Schraubenverbindung gewählt. Ganz besonders bevorzugt beträgt die Axialerstreckung des Spaltes weniger als 2mm, noch weiter bevorzugt weniger als 1mm, besonders bevorzugt weniger als 0,6mm. Ganz besonders zweckmäßig ist es, die Axialerstreckung des Spaltes aus einem Wertebereich zwischen etwa 0,1mm und 0,5mm zu wählen. Durch die minimale Axialerstreckung des Spaltes wird auch eine minimale Axialerstreckung des gesamten Schraubenelementes erhalten, wodurch zum einen Material eingespart werden und zum anderen auch das korrespondierende Innengewindeelement in einer minimierten Axialerstreckung realisiert werden kann. Insbesondere für Anwendungen, in denen bauartbedingt eine größere Axialerstreckung des Innengewindelementes nicht realisierbar ist hat die geringe Axialerstreckung des Spaltes erhebliche Vorteile.

Bevorzugt wird der minimale Spalt dadurch erhalten, dass zunächst ein Schraubenelementrohling zur Erzeugung der beiden Axialabschnitte mit dem gleichen Durchmesser gepresst, insbesondere kaltfließgepresst, wird. Dabei ist es besonders bevorzugt, wenn die Axialabschnitte nach dem (Kaltfließ)-Pressen axial unmittelbar aneinander anliegen. In demselben oder bevorzugt in einem darauffolgenden Schritt, vorzugsweise in einem gemeinsamen Verfahrensschritt, werden die Außengewinde in die Axialabschnitte eingebracht.

Jedenfalls werden die fertigen Außengewindeabschnitte, d.h. die mit Außengewinden versehenen Axialabschnitte, dann zur Bildung des Spaltes voneinander entfernt, und zwar bevorzugt weniger weit als 2mm, noch weiter bevorzugt weniger weit als 1mm, ganz besonders bevorzugt weniger weit als 0,6mm voneinander entfernt, so dass das Schraubenelement mit seiner minimalen Axialerstreckung erhalten wird.

Besonders zweckmäßig ist es, wenn der Durchmesser des vorzugsweise zylindrisch konturierten Verbindungsabschnittes nur etwa 20% bis etwa 75% des Durchmessers, insbesondere des Kerndurchmessers der Außengewindeabschnitte beträgt. Ganz besonders bevorzugt beträgt der Durchmesser des Verbindungsabschnittes nur etwa 25% bis 50% des Durchmessers, insbesondere des Kerndurchmessers der, vorzugsweise den gleichen Durchmesser aufweisenden, Außengewindeabschnitte.

Im Hinblick auf die konkrete Ausbildung des Schraubenelementes gibt es unterschiedlichste Möglichkeiten. Ganz besonders bevorzugt ist eine Ausführungsform des Schraubenelementes (Sicherungsschraube) als Kopfschraube oder als Stiftschraube.

Ganz besonders bevorzugt ist eine Ausführungsform des Schraubenelementes, bei der das Bremsmoment dadurch realisiert wird, dass ein Gewindegangauslauf des ersten, vorzugsweise endseitigen, Außengewindeabschnittes derart von einem Gewindegangeinlauf des zweiten, axial benachbarten Außengewindeabschnittes beabstandet ist, dass ein Gewindesteigungssprung zwischen den Außengewindeabschnitten realisiert ist. Anders ausgedrückt sind die beiden, vorzugsweise die gleiche Gewindesteigung aufweisenden Außengewindeabschnitte derart positioniert, dass die Gewindegänge der Außengewindeabschnitte nicht exakt in Gewindegangrichtung miteinander fluchten, sodass, sobald der zweite Außengewindeabschnitt mit einem gemeinsamen Innengewindeelement in Wechselwirkung tritt, aufgrund der Verspannung zwischen den Gewindegängen beim Einschrauben ein Bremsmoment resultiert.

Der Gewindegangsprung kann beispielsweise dadurch realisiert werden, dass der Gewindegangauslauf des ersten Außengewindeabschnittes entsprechend weit axial von dem Gewindegangeinlauf des zweiten Außengewindeabschnittes beabstandet ist. Bevorzugt wird bei der Herstellung durch ein axiales Relativverstellen der Außengewindeabschnitte zueinander automatisch eine Beabstandung des Gewindegangauslaufs des ersten Außengewindeabschnittes zum Gewindegangeinlauf des zweiten Außengewindeabschnittes erreicht. Auch ist es möglich, die Außengewindeabschnitte bei der Herstellung des Schraubenelementes relativ zueinander zu tordieren und dadurch den Gewindegangauslauf des ersten Außengewindeabschnittes relativ zu dem Gewindegangeinlauf des zweiten Außengewindeabschnittes zu versetzen. Über die Wahl der Größe des Axialversatzes und/oder des Versatzes in Umfangsrichtung kann die Größe des Bremsmomentes eingestellt werden.

Bevorzugt werden die Außengewindeabschnitte bei der Herstellung des Schraubenelementes derart relativ zueinander positioniert, dass der eingestellte axiale Abstand zwischen den Außengewindeabschnitten, genauer zwischen einem Gewindegangauslauf des ersten Außengewindeabschnittes und einem Gewindegangeinlauf eines zweiten Gewindegangabschnitts nicht exakt der Gewindesteigung der Außengewindeabschnitte und nicht exakt einem ganzzahligen Vielfachen der Gewindesteigung der Außengewindeabschnitte entspricht. Wäre dies der Fall, könnte das Schraubenelement ohne die Wirkung eines Bremsmomentes mittels beider Außengewindeabschnitte mit einem Innengewindeelement verschraubt werden. Bei der Gewindesteigung handelt es sich um den axialen Weg, den ein Außengewindeabschnitt bei einer ganzen Umdrehung des Schraubenelementes in ein Innengewindeelement verstellt wird.

Ganz besonders bevorzugt ist eine Ausführungsform des Schraubenelementes, bei der die beiden Außengewindeabschnitte jeweils ein metrisches Außengewinde umfassen.

Wie eingangs bereits angedeutet ist es besonders bevorzugt, wenn die Steigung und/oder die Gewindegröße der beiden Außengewindeabschnitte gleich ist. Ganz besonders bevorzugt weisen beide Außengewindeabschnitte das gleiche Gewinde auf, wobei sich die Außengewindeabschnitte in ihrer Axialerstreckung unterscheiden können. Selbstverständlich ist auch eine Ausführungsform realisierbar, bei der sich die Außengewindeabschnitte hinsichtlich mindestens eines Gewindeparameters, beispielsweise der Gewindesteigung, unterscheiden. Bevorzugt ist es jedoch, die gleichen Gewinde an beiden Außengewindeabschnitten vorzusehen.

Besonders zweckmäßig ist es, wenn die beiden Außengewindeabschnitte durch relatives Verstellen in axialer und/oder in Umfangsrichtung zueinander positioniert sind, um das gewünschte Bremsmoment (Sicherungsmoment) zu erzeugen.

Die Erfindung führt auch auf eine Schraubverbindung, umfassend ein wie zuvor beschrieben ausgebildetes Schraubenelement, das mit seinen beiden Außengewindeabschnitten mit einem gemeinsamen Innengewindeelement verschraubt ist. Bevorzugt ist dabei zwischen beiden Außengewindeabschnitten ein Gewindesteigungssprung realisiert, sodass es ab dem Moment des Einschraubens des zweiten Außengewindeabschnittes in das Innengewindeelement zu axialen Verspannungen in den Gewindegängen kommt.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: in einer schematischen Darstellung ein erstes Ausführungsbeispiel eines Schraubenelementes mit zwei axial beabstandeten Außengewindeabschnitten, die sich lediglich in ihrer Axialerstreckung unterscheiden, wobei ein Gewindegangauslauf des ersten Außengewindeabschnittes ausschließlich durch axiales Verstellen der Außengewindeabschnitte relativ zueinander in Umfangsrichtung sowie axial zu einem Gewindegangeinlauf des zweiten Außengewindeabschnittes versetzt ist,
- Fig. 2:: ein alternatives Ausführungsbeispiel, bei dem die beiden Außengewindeabschnitte relativ zueinander tordiert sind, wodurch ein Versatz in Umfangsrichtung des Gewindegangauslaufs des ersten Außengewindeabschnittes relativ zum Gewindegangeinlauf des zweiten Außengewindeabschnittes realisiert ist,
- Fig. 3:: eine Schraubverbindung mit einem als Kopfschraube ausgebildeten Schraubenelement und
- Fig. 4a bis 4c:: in schematischen Darstellungen den Ablauf einer ersten Herstellungsverfahrensalternative.

In den Figuren sind gleiche Elemente und Elemente mit der gleichen Funktion mit den gleichen Bezugszeichen gekennzeichnet.

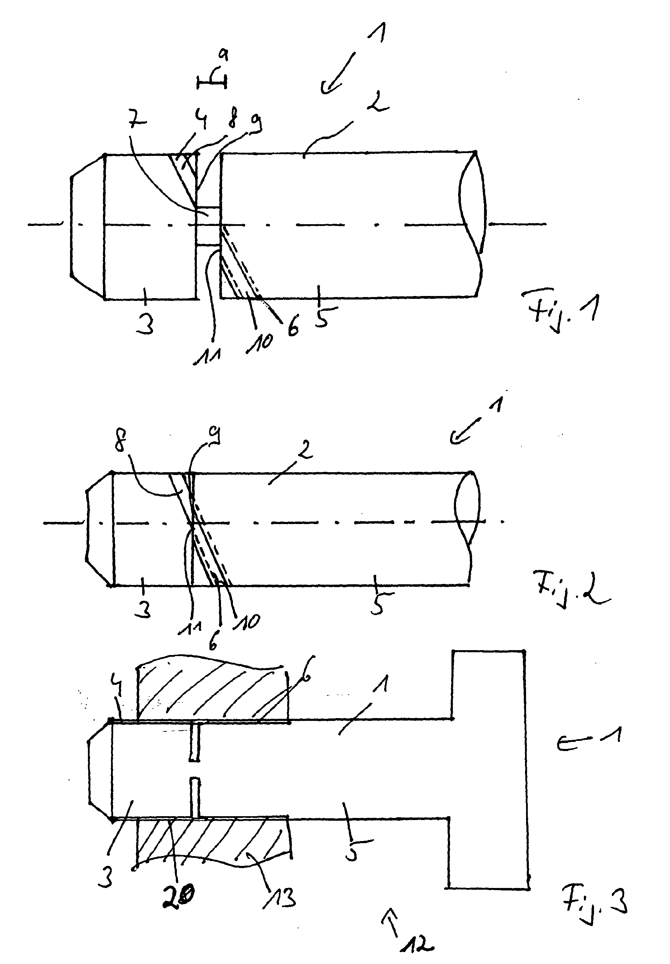

In Fig. 1 ist ausschnittsweise ein Schraubenelement 1 gezeigt. Das Schraubenelement 1 umfasst einen Schaft 2 mit einem ersten, endseitigen, Außengewindeabschnitt 3, aufweisend ein erstes Außengewinde 4. Axial benachbart zu dem ersten Außengewindeabschnitt 3 ist ein zweiter Außengewindeabschnitt 5 mit einem zweiten Außengewinde 6 angeordnet. Beide Außengewinde 4, 6 sind identisch, d.h. sie weisen die gleiche Gangrichtung, die gleiche Steigung sowie die gleiche Gewindegröße auf.

Wie sich aus Fig. 1 ergibt, ist der Durchmesser (Kern- sowie Flankendurchmesser) der beiden Außengewindeabschnitte 3, 5 identisch. Die Außengewindeabschnitte 3, 5 sind beide an dem einteiligen Schaft 2 ausgebildet und über einen zylindrischen Verbindungsabschnitt 7 (einteilig) miteinander verbunden. Der Verbindungsabschnitt 7 weist einen geringeren Durchmesser auf als die Außengewindeabschnitte 3, 5, wobei die Größe des Durchmessers die Federwirkung des zylindrischen Verbindungsabschnittes 7 in axialer Richtung bestimmt.

Das erste Außengewinde 4 des ersten Außengewindeabschnittes 3 umfasst einen nur teilweise dargestellten ersten Gewindegang 8, umfassend einen Gewindegangauslauf 9. Das zweite Außengewinde 6 des zweiten Außengewindeabschnittes 5 umfasst einen nur ausschnittsweise dargestellten zweiten Gewindegang 10 mit einem dem ersten Außengewindeabschnitt 3 zugewandten Gewindegangeinlauf 11. Der Gewindegangauslauf 9 des ersten Außengewindeabschnittes 3 ist derart zu dem Gewindegangeinlauf 11 des zweiten Außengewindeabschnittes 5 positioniert, dass beim Verschrauben der Außengewindeabschnitte 3, 5 mit einem nicht dargestellten Innengewindeelement ein Bremsmoment resultiert.

Wie sich aus Fig. 1 ergibt, ist zwischen den Gewindegängen 8, 10 der Außengewindeabschnitte 3, 5 ein Gewindesteigungssprung realisiert. Ohne Gewindesteigungssprung würde der zweite Gewindegang 10, wie strichliert angedeutet, in Gewindegangrichtung mit dem ersten Gewindegang 8 fluchten, und es würde beim Verschrauben der Außengewindeabschnitte 3, 5 mit einem Innengewindeelement kein Bremsmoment resultieren. Der Abstand a zwischen dem Gewindegangauslauf 9 des ersten Gewindeabschnittes 3 und dem Gewindegangeinlauf 11 des zweiten Gewindegangs 10 differiert (etwas) von der Steigung der Gewindegänge 8, 10, sodass beim Verschrauben der Außengewindeabschnitte 3, 5 mit einem Innengewindeelement eine Verspannung in axialer Richtung auftritt und somit ein Brems- d.h. Sicherungsmoment resultiert. Wie sich aus Fig. 1 ergibt, befinden sich die Umfangsmitten des Gewindegangauslaufs 9 und des Gewindegangeinlaufs 11 nicht exakt auf demselben Umfangswinkel, sondern sind in Umfangsrichtungsverlauf (etwas) zueinander versetzt angeordnet, wodurch der vorerwähnte Gewindesteigungssprung realisiert wird.

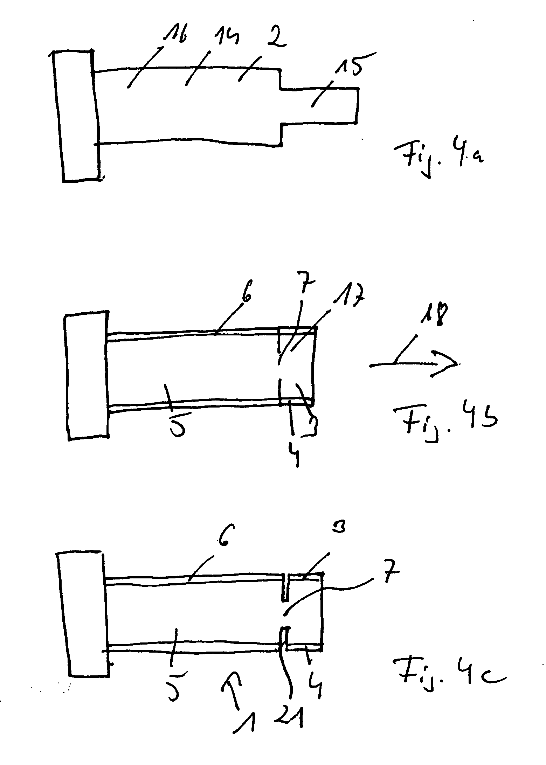

Die in Fig. 1 gezeigte Relativpositionierung der Gewindegänge 8, 10 der Außengewindeabschnitte 3, 5 relativ zueinander kann entweder durch Herstellung der in Fig. 1 gezeigten Umfangsnut (Einstich) mit der Breite a (insbesondere a = 0,1 mm bis etwa 0,5 mm) erzeugt werden, wozu jedoch eine (aufwändigere) spanende Bearbeitung notwendig wäre. Bevorzugt wurde der Axialversatz zwischen den Außengewindeabschnitten 3, 5 und der daraus resultierende Umfangsversatz zwischen Gewindegangauslauf 9 und Gewindegangeinlauf 11 durch eine axiale Verstellbewegung der Außengewindeabschnitte 3, 5 relativ zueinander realisiert, was später noch anhand der Fig. 4a bis 4c erläutert wird.

Fig. 2 zeigt ein alternatives Ausführungsbeispiel eines einteiligen Schraubenelementes 1 mit einem Schaft 2. Zu erkennen sind die einteilig miteinander verbundenen Außengewindeabschnitte 3, 5 mit dem ersten bzw. zweiten Außengewinde 4, 6. Wie bei dem Ausführungsbeispiel gemäß Fig. 1 ist der Gewindegangauslauf 9 des ersten Gewindegangs 8 des ersten Außengewindes 4 in Umfangsrichtung (etwas) versetzt angeordnet zu dem Gewindegangeinlauf 11 des zweiten Gewindegangs 10 des zweiten Außengewindes 6. Vor der Relativpositionierung fluchteten die beiden Gewindegänge 8, 10 in Gewindegangrichtung miteinander, was durch die gestrichelte Darstellung der Relativposition des zweiten Gewindegangabschnittes gemäß Fig. 2 deutlich wird.

Zur Realisierung des in Fig. 2 dargestellten Ausführungsbeispiels wurden die Außengewindeabschnitte 3, 5 beispielsweise ausschließlich durch Tordieren relativ zueinander verstellt.

In Fig. 3 ist eine Schraubverbindung 12 gezeigt. Diese umfasst ein als Kopfschraube ausgebildetes Schraubenelement 1, welches mit seinen beiden Außengewindeabschnitten 3, 5 mit einem durchgehenden Innengewinde 20 eines gemeinsamen Innengewindeelementes 13 verschraubt ist. Durch den Versatz des nicht eingezeichneten (hier eine Mutter) Gewindegangauslaufs 9 des ersten Außengewindes 4 zu dem Gewindegangeinlauf 11 des zweiten Außengewindes 6 ergibt sich beim Verschrauben bzw. durch das Verschrauben ein Bremsmoment.

Im Folgenden wird anhand der Fig. 4a bis 4c ein bevorzugtes Herstellungsverfahren zum Herstellen eines, beispielsweise wie in Fig. 1 ausgebildeten, Schraubenelementes 1 beschrieben. Zunächst wird in einem ersten Verfahrensschritt durch Kaltfließpressen ein Schraubenelementrohling 14 hergestellt, wie dieser in Fig. 4a gezeigt ist. Der Schraubenelementrohling 14 umfasst einen Schaft 2, der gestuft ausgebildet ist. Der Schaft 2 umfasst einen endseitigen ersten Schraubenelementrohlingsabschnitt 15 und einen axial benachbarten zweiten Axialabschnitt 16, wobei der Durchmesser des Schraubenelementrohlingsabschnittes 15 (deutlich) geringer ist als der Durchmesser des zweiten Axialabschnittes 16.

In einem darauffolgenden Verfahrensschritt wird der Schraubenelementrohlingsabschnitt 15 so gepresst, dass seine Axialerstreckung reduziert, dafür seine Radialerstreckung vergrößert wird, wodurch der in Fig. 4b gezeigte endseitige erste Axialabschnitt 17 erhalten wird. Bevorzugt wird gleichzeitig mit diesem Pressvorgang in den ersten Axialabschnitt 17 sowie in den zweiten Axialabschnitt 16 ein Gewinde eingebracht. Das Einbringen des Gewindes kann auch in einem nachgelagerten Rollier- oder Pressschritt erfolgen. Wesentlich ist, dass der erste Außengewindeabschnitt 3 sowie der zweite Außengewindeabschnitt 5 erhalten werden, die zentrisch über den eine Federwirkung bewirkenden Verbindungsabschnitt 7 einteilig miteinander verbunden bzw. ausgebildet sind. Das erste Außengewinde 4 des ersten Axialabschnitts 17 und das zweite Außengewinde 6 des zweiten Axialabschnitts 16 sind bis auf deren Axialerstreckung identisch. Die beiden Außengewindeabschnitte 3,5 liegen stirnseitig, d.h. in axialer Richtung unmittelbar aneinander an.

Wie durch den Pfeil 18 in Fig. 4 angedeutet, werden die Außengewindeabschnitte 3, 5 durch axiales Verstellen, hier durch Auseinanderziehen, derart relativ zueinander positioniert, dass beim Verdrehen des Schraubenelementes 1 in einem gemeinsamen Innengewindeelement ein Bremsmoment resultiert. Bei dem Verstellen wird die Axialerstreckung des Verbindungsabschnittes 7 verändert - in dem gezeigten Ausführungsbeispiel vergrößert, wie sich aus der Darstellung gemäß Fig. 4c ergibt. Bevorzugt wird die Axialerstreckung a des Verbindungsabschnittes 7 und damit die Axialerstreckung des Spaltes 21 (Umfangsnut) von etwa null auf einen Wert aus einem Wertebereich zwischen etwa 0,1 mm und etwa 0,5 mm vergrößert. Es resultiert ein Schraubenelement 1, bei dem der Gewindegangauslauf 9 bzw. (genauer) die Umfangsmitte des Gewindegangauslaufs 9 nicht exakt auf demselben Umfangswinkel liegt wie der Gewindegangeinlauf 11 bzw. die Umfangsmitte des Gewindegangeinlaufs 11 des zweiten Außengewindes 6 des zweiten Außengewindeabschnittes 5. Das in Fig. 4c gezeigte Schraubenelement 1 ist besonders geeignet für den Zugbelastungseinsatz, bei dem die Zugbelastung in dieselbe Richtung orientiert ist wie die axiale Verstellbewegung des ersten, endseitigen, Außengewindeabschnittes 3 relativ zu dem zweiten Außengewindeabschnitt 5 während der Herstellung (vergleiche Fig. 4b).

Bei dem anhand der Fig. 4a bis 4c gezeigten Ausführungsbeispiel sind der Gewindegangauslauf 9 und der Gewindeeinlauf 11 der Außengewinde 4, 6 in Umfangsrichtung etwas versetzt zueinander angeordnet, ohne dass die Außengewindeabschnitte 3, 5 relativ zueinander tordiert worden wären, was jedoch - falls gewünscht - zusätzlich oder alternativ zu einem axialen Relativverstellen der Außengewindeabschnitte 3, 5 möglich ist.

### Bezugszeichenliste

- 1: Schraubenelement
- 2: Schaft
- 3: erster Außengewindeabschnitt
- 4: erstes Außengewinde
- 5: zweiter Außengewindeabschnitt
- 6: zweites Außengewinde
- 7: Verbindungsabschnitt
- 8: erster Gewindegang
- 9: Gewindegangauslauf
- 10: zweiter Gewindegang
- 11: Gewindegangeinlauf
- 12: Schraubverbindung
- 13: Innengewindeelement
- 14: Schraubenelementrohling
- 15: Schraubenelementrohlingsabschnitt
- 16: zweiter Axialabschnitt
- 17: erster Axialabschnitt
- 18: Pfeil
- 19: Pfeil
- 20: Innengewinde
- 21: Spalt (Umfangsnut)

- a: Breite/Breitenerstreckung

## Patentansprüche

1. Verfahren zum Herstellen eines Schraubenelementes (1) mit einem ersten Außengewindeabschnitt (3) und mit einem zweiten Außengewindeabschnitt (5), wobei sich das herzustellende Schraubenelement (1) dadurch auszeichnet, dass der zweite Außengewindeabschnitt (5) derart zu dem ersten Außengewindeabschnitt (3) positioniert ist, dass beim gemeinsamen Verschrauben der beiden Außengewindeabschnitte (3, 5) mit einem Innengewindeelement (13) ein Bremsmoment resultiert, mit den folgenden Verfahrensschritten:
relatives zueinander Positionieren des ersten und des zweiten Außengewindeabschnittes (3, 5) derart, dass beim gemeinsamen Verschrauben der beiden Außengewindeabschnitte (3, 5) mit einem Innengewindeelement (13) das Bremsmoment resultiert, wobei
die Positionierung der Außengewindeabschnitte (3, 5) durch definiertes relatives Verstellen der Außengewindeabschnitte (3, 5) in axialer Richtung und/oder in Umfangsrichtung durchgeführt wird,
**dadurch gekennzeichnet,**
**dass** der erste Außengewindeabschnitt (3) an einem, insbesondere endseitigen, gepressten ersten Axialabschnitt (17) und der zweite Außengewindeabschnitt (5) an einem, benachbart zum ersten Axialabschnitt (17) angeordneten zweiten Axialabschnitt (16) eines Schraubenelementrohlings (14) hergestellt werden, und dass der erste Axialabschnitt (17) aus einem durchmesserreduzierten Schraubenelementrohlingsabschnitt (15) gepresst wird, durch Pressen in Richtung des zweiten Axialabschnittes (16), derart, dass der Durchmesser des ersten Axialabschnittes (17) dem Durchmesser des zweiten Axialabschnittes (16) entspricht.

2. Verfahren nach Anspruch 1 ,
**dadurch gekennzeichnet,**
**dass** die Gewindegänge (8, 10) des ersten Außengewindeabschnittes (3) und des zweiten Außengewindeabschnittes (5) in einem Arbeitsgang vor dem relativen zueinander Verstellen der Außengewindeabschnitte (3, 5), eingebracht werden.

3. Verfahren nach einem der Ansprüche 1 oder 2,
**dadurch gekennzeichnet,**
**dass** die beiden Außengewindeabschnitte (3, 5) des Schraubenelementrohlings aneinander anliegen, bevor in einem weiteren Verfahrensabschnitt das relative Verstellen der Außengewindeabschnitte (3, 5) voneinander weg erfolgt.

4. Verfahren nach Anspruch 3,
**dadurch gekennzeichnet,**
**dass** die Axialabschnitte (16, 17), insbesondere zum Herstellen eines auf Zug beaufschlagbaren Schraubenelementes (1), voneinander weg verstellt werden.

5. Schraubenelement, hergestellt nach einem der Ansprüche 1 bis 4, mit einem ersten Außengewindeabschnitt (3) und mit einem zweiten Außengewindeabschnitt (5), wobei der zweite Außengewindeabschnitt (5) derart zu dem ersten Außengewindeabschnitt (3) positioniert ist, dass beim gemeinsamen Verschrauben der beiden Außengewindeabschnitte (3, 5) mit einem Innengewindeelement (13) ein Bremsmoment resultiert, wobei die beiden Außengewindeabschnitte (3, 5) durch einen Verbindungsabschnitt (7) miteinander verbunden sind, der einen geringeren Durchmesser aufweist als die Außengewindeabschnitte (3, 5), wobei vorzugsweise der Durchmesser des Verbindungsabschnittes (7) so gewählt ist, dass der Verbindungsabschnitt (7), insbesondere beim Verschrauben des Schraubenelementes (1) mit einem korrespondierenden Innengewindeelement, axial elastisch stauchbar ist.

6. Schraubenelement nach Anspruch 5,
**dadurch gekennzeichnet,**
**dass** der Verbindungsabschnitt (7) um mindestens 0,1 mm, vorzugsweise mindestens 0,2mm, noch weiter bevorzugt um mindestens 0,3mm elastisch stauchbar ist.

7. Schraubenelement nach einem der Ansprüche 5 oder 6,
**dadurch gekennzeichnet,**
**dass** der Abstand der Außengewindeabschnitte (3, 5) kleiner als 2mm, vorzugsweise kleiner als 1 mm, noch weiter bevorzugt kleiner als 0,6mm, besonders bevorzugt ist der Abstand aus einem Wertebereich zwischen 0,1 mm und 0,5mm gewählt ist.

8. Schraubenelement nach einem der Ansprüche 5 bis 7,
**dadurch gekennzeichnet,**
**dass** der Durchmesser des Verbindungsabschnittes (7) 20% bis 75%, vorzugsweise 25% bis 50%, des Durchmessers der Außengewindeabschnitte (3, 5) beträgt.

9. Schraubenelement nach einem der Ansprüche 5 bis 8,
**dadurch gekennzeichnet,**
**dass** ein Gewindegangauslauf (9) des ersten Außengewindeabschnittes (3) derart von einem Gewindegangeinlauf (11) des zweiten Außengewindeabschnittes (5) beabstandet ist, dass ein Gewindesteigungssprung zwischen den Außengewindeabschnitten (3, 5) realisiert ist, und/oder dass ein Gewindegangauslauf (9) des ersten Außengewindeabschnittes (3) axial von einem Gewindegangeinlauf (11) des zweiten Außengewindeabschnittes (5) beabstandet ist.

10. Schraubenelement nach einem der Ansprüche 5 bis 9,
**dadurch gekennzeichnet,**
**dass** ein Gewindegangauslauf (9) des ersten Außengewindeabschnittes (3) in Umfangsrichtung zu einem Gewindegangeinlauf (11) des zweiten Außengewindeabschnittes (5) versetzt ist.

11. Schraubenelement nach einem der Ansprüche 9 oder 10,
**dadurch gekennzeichnet,**
**dass** der axiale Abstand zwischen dem Gewindegangauslauf (9) des ersten Außengewindeabschnittes (3) von dem Gewindegangeinlauf (11) des zweiten Außengewindeabschnittes (5) größer oder kleiner ist als die Gewindesteigung des ersten und des zweiten Außengewindeabschnittes (3, 5), oder größer oder kleiner ist als ein ganzzahliges Vielfaches der Gewindesteigung des ersten und des zweiten Außengewindeabschnittes (3, 5).

12. Schraubenelement nach einem der Ansprüche 5 bis 11,
**dadurch gekennzeichnet,**
**dass** der erste und der zweite Außengewindeabschnitt (3, 5) ein metrisches Gewinde umfassen, und/oder dass die Steigung und/oder die Gewindegröße der Außengewindeabschnitte (3, 5) gleich ist.

13. Schraubenelement nach einem der vorhergehenden Ansprüche 5 bis 12,
**dadurch gekennzeichnet,**
**dass** die Außengewindeabschnitte (3, 5) durch relatives Verstellen in axialer und/oder in Umfangsrichtung zueinander positioniert sind.

14. Schraubverbindung (12) umfassend ein Schraubenelement (1) nach einem der Ansprüche 5 bis 13 und ein Innengewindeelement (13), wobei der erste und der zweite Außengewindeabschnitt (3, 5) des Schraubenelementes (1) mit dem Innengewindeelement verschraubt und in dem Innengewinde mittels eines Bremsmomentes gehalten sind.

## Claims

1. Method for producing a screw element (1) having a first external thread portion (3) and a second external thread portion (5), the screw element (1) to be produced being **characterised in that** the second external thread portion (5) is positioned relative to the first external thread portion (3) in such a way that braking torque is produced when the two external thread portions (3, 5) are screwed together with an internal thread element (13), comprising the following method steps:
the first and second external thread portions (3, 5) are positioned relative to one another in such a way that the braking torque is produced when the two external thread portions (3, 5) are screwed together with an internal thread element (13),
the external thread portions (3, 5) being positioned by means of defined relative displacement of the external thread portions (3, 5) in an axial direction and/or in a circumferential direction,
**characterised in that** the first external thread portion (3) is produced at an extruded first axial portion (17), which is arranged in particular at the end face, and the second external thread portion (5) is produced at a second axial portion (16), which is adjacent to the first axial portion (17), of a screw element blank (14), and **in that** the first axial portion (17) is extruded from a reduced-diameter screw element blank portion (15) by means of extrusion in the direction of the second axial portion (16), in such a way that the diameter of the first axial portion (17) corresponds to the diameter of the second axial portion (16).

2. Method according to claim 1, **characterised in that** the threads (8, 10) of the first external thread portion (3) and of the second external thread portion (5) are introduced in an operation which precedes the external thread portions (3, 5) being displaced relative to one another.

3. Method according to either claim 1 or claim 2, **characterised in that** the two external thread portions (3, 5) of the screw element blank abut one another prior to the relative displacement of the external thread portions (3, 5) away from one another in a further stage of the method.

4. Method according to claim 3, **characterised in that** the axial portions (16, 17) are displaced away from one another, in particular for producing a screw element (1) that can be exposed to tensile stress.

5. Screw element, produced according to any of claims 1 to 4, comprising a first external thread portion (3) and a second external thread portion (5), wherein the second external thread portion (5) is positioned relative to the first external thread portion (3) in such a way that braking torque is produced when the two external thread portions (3, 5) are screwed together with an internal thread element (13), wherein the two external thread portions (3, 5) are interconnected by a connecting portion (7) which has a smaller diameter than the external thread portions (3, 5), wherein the diameter of the connecting portion (7) is preferably selected such that the connecting portion (7) can be compressed in an axially resilient manner, in particular when the screw element (1) and a corresponding internal thread element are screwed together.

6. Screw element according to claim 5, **characterised in that** the connecting portion (7) can be resiliently compressed by at least 0.1 mm, preferably by at least 0.2 mm and more preferably by at least 0.3 mm.

7. Screw element according to either claim 5 or claim 6, **characterised in that** the spacing of the external thread portions (3, 5) is selected so as to be less than 2 mm, preferably less than 1 mm and more preferably less than 0.6 mm, the spacing particularly preferably being selected from a range between 0.1 mm and 0.5 mm.

8. Screw element according to any of claims 5 to 7, **characterised in that** the diameter of the connecting portion (7) is 20 % to 75 %, preferably 25 % to 50 %, of the diameter of the external thread portions (3, 5).

9. Screw element according to any of claims 5 to 8, **characterised in that** a thread run-out (9) of the first external thread portion (3) is spaced apart from a thread lead-in (11) of the second external thread portion (5) in such a way that a jump in thread pitch is produced between the external thread portions (3, 5), and/or that a thread run-out (9) of the first external thread portion (3) is axially spaced apart from a thread lead-in (11) of the second external thread portion (5).

10. Screw element according to any of claims 5 to 9, **characterised in that** a thread run-out (9) of the first external thread portion (3) is offset in a circumferential direction relative to a thread lead-in (11) of the second external thread portion (5)

11. Screw element according to either claim 9 or claim 10, **characterised in that** the axial spacing between the thread run-out (9) of the first external thread portion (3) and the thread lead-in (11) of the second external thread portion (5) is greater or smaller than the thread pitch of the first and second external thread portions (3, 5), or greater or smaller than an integral multiple of the thread pitch of the first and second external thread portions (3, 5).

12. Screw element according to any of claims 5 to 11, **characterised in that** the first and second external thread portions (3, 5) encompass a metric thread, and/or **in that** the pitch and/or thread size of the external thread portions (3, 5) is identical.

13. Screw element according to any of claims 5 to 12, **characterised in that** the external thread portions (3, 5) are positioned relative to one another by means of relative displacement in an axial and/or a circumferential direction.

14. Screw connection (12) comprising a screw element (1) according to any of claims 5 to 13 and an internal thread element (13), wherein the first and second external thread portions (3, 5) of the screw element (1) are screwed together with the internal thread element and held in the internal thread by means of braking torque.

## Revendications

1. Procédé de fabrication d'un élément fileté (1) comprenant une première portion de filetage extérieur (3) et une deuxième portion de filetage extérieur (5), l'élément fileté (1) à fabriquer **se caractérisant par le fait que** la deuxième portion de filetage extérieur (5) est positionnée par rapport à la première portion de filetage extérieur (3) de telle sorte que lors du vissage conjoint des deux portions de filetage extérieur (3, 5) avec un élément de filetage intérieur (13), on obtient un couple de freinage, comprenant les étapes de procédé suivantes :
positionnement l'une par rapport à l'autre de la première et de la deuxième portion de filetage extérieur (3, 5) de telle sorte que lors d'un vissage conjoint des deux portions de filetage extérieur (3, 5) avec un élément de filetage intérieur (13), on obtient le couple de freinage,
le positionnement des portions de filetage extérieur (3, 5) étant effectué par un déplacement relatif défini des portions de filetage extérieur (3, 5) dans la direction axiale et/ou dans la direction périphérique,
**caractérisé en ce que**
la première portion de filetage extérieur (3) est fabriquée au niveau d'une première portion axiale pressée (17) notamment d'un côté, et la deuxième portion de filetage extérieur (5) est fabriquée au niveau d'une deuxième portion axiale (16) disposée à côté de la première portion axiale (17), d'une ébauche d'élément fileté (14), et **en ce que** la première portion axiale (17) est pressée à partir d'une portion d'ébauche d'élément fileté de diamètre réduit (15), par pressage dans la direction de la deuxième portion axiale (16), de telle sorte que le diamètre de la première portion axiale (17) corresponde au diamètre de la deuxième portion axiale (16).

2. Procédé selon la revendication 1,
**caractérisé en ce que**
les filets (8, 10) de la première portion de filetage extérieur (3) et de la deuxième portion de filetage extérieur (5) sont pratiqués en une seule passe de travail avant le déplacement relatif l'une par rapport à l'autre des portions de filetage extérieur (3, 5).

3. Procédé selon l'une quelconque des revendications 1 ou 2,
**caractérisé en ce que**
les deux portions de filetage extérieur (3, 5) de l'ébauche d'élément fileté s'appliquent l'une contre l'autre, avant que, dans une étape de procédé supplémentaire, se produise le déplacement relatif des portions de filetage extérieur (3, 5) à l'écart l'une de l'autre.

4. Procédé selon la revendication 3,
**caractérisé en ce que**
les portions axiales (16, 17) sont déplacées à l'écart l'une de l'autre, notamment pour créer un élément fileté (1) pouvant être sollicité en traction.

5. Elément fileté, fabriqué selon l'une quelconque des revendications 1 à 4, comprenant une première portion de filetage extérieur (3) et une deuxième portion de filetage extérieur (5), la deuxième portion de filetage extérieur (5) étant positionnée par rapport à la première portion de filetage extérieur (3) de telle sorte que lors du vissage conjoint des deux portions de filetage extérieur (3, 5) avec un élément de filetage intérieur (13), il en résulte un couple de freinage, les deux portions de filetage extérieur (3, 5) étant connectées l'une à l'autre par une portion de connexion (7) qui présente un plus petit diamètre que les portions de filetage extérieur (3, 5), le diamètre de la portion de connexion (7) étant choisi de préférence de telle sorte que la portion de connexion (7), notamment lors du vissage de l'élément fileté (1) avec un élément fileté intérieur correspondant, puisse être comprimée axialement de manière élastique.

6. Elément fileté selon la revendication 5,
**caractérisé en ce que**
la portion de connexion (7) peut être comprimée de manière élastique d'au moins 0,1 mm, de préférence d'au moins 0,2 mm, et encore plus préférablement d'au moins 0,3 mm.

7. Elément fileté selon l'une quelconque des revendications 5 ou 6,
**caractérisé en ce que**
la distance des portions de filetage extérieur (3, 5) est inférieure à 2 mm, de préférence inférieure à 1 mm, encore plus préférablement inférieure à 0,6 mm, et particulièrement préférablement, la distance est choisie dans une plage de valeurs comprise entre 0,1 mm et 0,5 mm.

8. Elément fileté selon l'une quelconque des revendications 5 à 7,
**caractérisé en ce que**
le diamètre de la portion de connexion (7) vaut 20 % à 75 %, de préférence 25 % à 50 % du diamètre des portions de filetage extérieur (3, 5).

9. Elément fileté selon l'une quelconque des revendications 5 à 8,
**caractérisé en ce**
**qu'**une sortie de filet (9) de la première portion de filetage extérieur (3) est espacée d'une entrée de filet (11) de la deuxième portion de filetage extérieur (5) de telle sorte qu'un saut de pas de filetage soit réalisé entre les portions de filetage extérieur (3, 5), et/ou qu'une sortie de filet (9) de la première portion de filetage extérieur (3) soit espacée axialement d'une entrée de filet (11) de la deuxième portion de filetage extérieur (5).

10. Elément fileté selon l'une quelconque des revendications 5 à 9,
**caractérisé en ce**
**qu'**une sortie de filet (9) de la première portion de filetage extérieur (3) est décalée dans la direction périphérique d'une entrée de filet (11) de la deuxième portion de filetage extérieur (5).

11. Elément fileté selon l'une quelconque des revendications 9 ou 10,
**caractérisé en ce que**
la distance axiale entre la sortie de filet (9) de la première portion de filetage extérieur (3) et l'entrée de filet (11) de la deuxième portion de filetage extérieur (5) est supérieure ou inférieure au pas de filetage de la première et de la deuxième portion de filetage extérieur (3, 5) ou supérieure ou inférieure à un multiple entier du pas de filetage de la première et de la deuxième portion de filetage extérieur (3, 5).

12. Elément fileté selon l'une quelconque des revendications 5 à 11,
**caractérisé en ce que**
la première et la deuxième portion de filetage extérieur (3, 5) comprennent un filetage métrique, et/ou **en ce que** le pas de filetage et/ou la grosseur du filetage des portions de filetage extérieur (3, 5) est égal(e).

13. Elément fileté selon l'une quelconque des revendications 5 à 12,
**caractérisé en ce que**
les portions de filetage extérieur (3, 5) sont positionnées l'une par rapport à l'autre par déplacement relatif dans la direction axiale et/ou périphérique.

14. Connexion filetée (12) comprenant un élément fileté (1) selon l'une quelconque des revendications 5 à 13 et un élément de filetage intérieur (13), la première et la deuxième portion de filetage extérieur (3 ,5) de l'élément fileté (1) étant vissées à l'élément de filetage intérieur et étant maintenues dans le filetage intérieur au moyen d'un couple de freinage.
